(19) Europäisches Patentamt
European Patent Office
Office européen des brevets

(11) EP 2 081 381 A1

(12) EUROPEAN PATENT APPLICATION

(43) Date of publication:
22.07.2009 Bulletin 2009/30

(51) Int Cl.:
*H04N 7/16* (2006.01)

(21) Application number: 08300093.5

(22) Date of filing: 14.02.2008

(84) Designated Contracting States:
AT BE BG CH CY CZ DE DK EE ES FI FR GB GR
HR HU IE IS IT LI LT LU LV MC MT NL NO PL PT
RO SE SI SK TR
Designated Extension States:
AL BA MK RS

(30) Priority: 17.01.2008 EP 08300035

(71) Applicant: Thomson Licensing
92100 Boulogne-Billancourt (FR)

(72) Inventors:
• Massoudi, Ayoub
  35700 Rennes (FR)
• Lefebvre, Frederic
  35000 Rennes (FR)
• Durand, ALAIN
  35000 Rennes (FR)

(74) Representative: Ruellan-Lemonnier, Brigitte
Thomson multimedia
Patent Department
46 Quai A. Le Gallo
92648 Boulogne Cedex (FR)

(54) **Method and apparatus for selective data encryption**

(57) A layered audiovisual packet data stream (CNT'), such as one obtained by a JPEG2000 encoder (810), is received together with information (metadata) about the contribution of each packet to the reduction of image distortion. The distortion-to-rate ratio for each packet is calculated (710) and the packets are ordered (720) is descending ratio. The non-encrypted packet having the highest ratio is encrypted (730) until the target distortion is obtained. Also provided is an apparatus (800).

Figure 7

## Description

FIELD OF THE INVENTION

The present invention relates generally to data encryption, and in particular to encryption of image data organised in bit streams.

BACKGROUND OF THE INVENTION

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

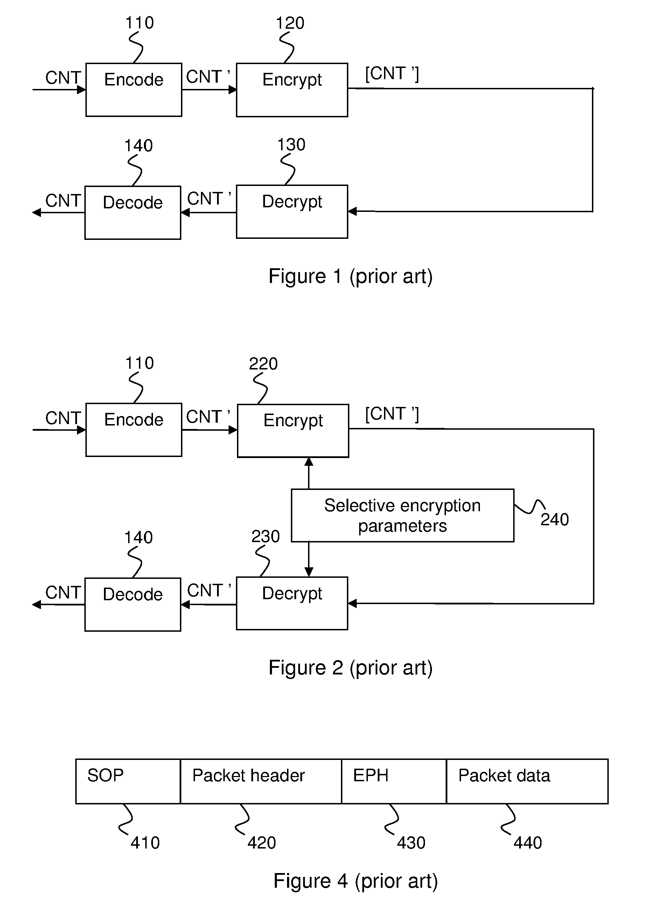

It has long been known to protect video data by encryption, notably in conditional access television systems. Figure 1 illustrates a traditional prior art approach for content access control. The video signal CNT is first encoded 110 using a standard compression encoder, and the resulting bit stream CNT' is then encrypted 120 using a symmetric encryption standard (such as DES, AES, or IDEA). The encrypted bit stream [CNT'] is then received by a receiver that decrypts 130 the encrypted bit stream [CNT'] to obtain an encoded bit stream CNT' that is decoded 140 to obtain a video signal CNT that is, at least in theory, identical to the initial video signal. In this approach, called fully layered, compression and encryption are completely independent processes. The media bit stream is processed as classical plaintext data, with the assumption that all symbols or bits in the plaintext are of equal importance.

This scheme is relevant when the transmission of the content is unconstrained, but it seems inadequate in situations where resources (such as memory, power or computation capabilities) are limited. Much research shows the specific characteristic of image and video content: high transmission rate and limited allowed bandwidth, which justifies the inadequacy of standard cryptographic techniques for such content. This has led to researchers to explore a new scheme of securing the content - named "selective encryption", "partial encryption", "soft encryption", or "perceptual encryption" - by applying encryption to a subset of a bit stream with the expectation that the resulting partially encrypted bit stream is useless without the decryption of the encrypted subset. The general approach is to separate the content into two parts: the first part is the basic part of the signal (for example Direct Current, DC, coefficients in Discrete Cosine Transform, DCT, decomposition, or the low frequency layer in Discrete Wavelet Transform, DWT, decomposition), which allows the reconstruction of an intelligible, but low quality version of the original signal, and a second part that could be called the "enhancement" part (for example Alternating Current, AC, coefficients in DCT decomposition of an image, or high frequency layers in DWT), which allows the recovery of fine details of the image and reconstruction of a high quality version of the original signal. According to this new scheme, only the basic part is encrypted, while the enhancement part is sent unencrypted or in some cases with light-weight scrambling. The aim is to protect the content and not the binary stream itself.

Figure 2 illustrates selective encryption according to the prior art. Encoding and decoding is performed as in Figure 1. In selective encryption, the encoded bit stream CNT' is encrypted 220 depending on selective encryption parameters 240. These parameters may, as mentioned, for example state that the only the DC coefficients or the low frequency layer should be encrypted, while the rest of the encoded bit stream CNT' should be left unencrypted. The partially encrypted bit stream [CNT'] is then (partially) decrypted 230 depending on the selective encryption parameters 240.

The following criteria are important for the evaluation of any selective encryption algorithm and will be used for the discussion of prior art algorithms:

- **Tunability:** a tunable selective encryption algorithm allows the variation of encryption parameters, which may be a desirable characteristic.
- **Visual degradation**: evaluates how much the encrypted image is distorted compared to the plain image. In some applications, low visual degradation could be desirable in order for customers to have degraded but visible content, as this permits a preview, while other applications may require strong visual degradation.
- **Cryptographic security**: gives a measure of how difficult the algorithm is to crack. The security of the algorithm relies partly on the encryption key, but it is advantageous that the encrypted part is not or hardly predictable from the non-encrypted part.
- **Encryption reduction**: gives the ratio of the encrypted part to the whole data. An efficient algorithm advantageously minimizes this ratio.
- **Format compliance/transcodability:** it is preferred that the encrypted bit stream be compliant with the compression format used to generate the compressed bit stream and that any standard decoder be able to decode the encrypted bit stream without decryption.
- **Compression friendliness:** a selective encryption algorithm is considered compression friendly if it has no or very little impact on compression efficiency.
- **Error resiliency**: indicates the desirable characteristic that a selective encryption algorithm does not propagate transmission errors and/or that it preserves the encoder error resiliency.

Further, as the prior art seems to focus on JPEG2000, which will also be used as a non-limitative embodiment of the invention, a brief introduction to relevant parts of this standard, i.e. its code stream structure, will now be given.

The JPEG2000 code stream is organized into packets, code stream packets are elementary units that transport data from a specific combination of entities called Resolution, Layer, Component and Precinct. A compressed image with R resolutions, L layers, P precincts and C components, thus results in RxLxCxP packets. It should be noted that the EBCOT (Embedded Block Coding Optimized Truncation) function of JPEG2000 encoder is able to provide information relating to the distortion-to-rate ratio of each packet.

JPEG2000 makes use of an embedded bit stream: the code stream can be truncated at any given end of packet without adverse impact on previously coded ones.

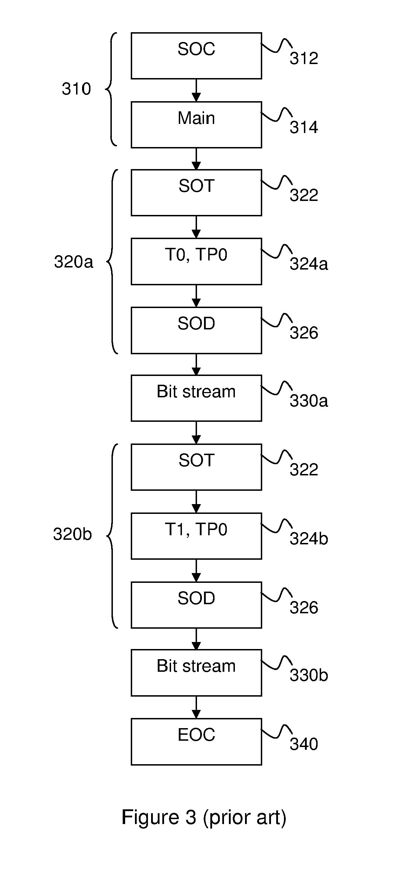

Figure 3 illustrates the main code stream structure, comprising:

• A main header 310, comprising a Start of Code stream (SOC = 0xFF4F) marker segment 312 and the main header marker segments 314. The SOC marker indicates the start of the code stream and is required as the first marker. The main header marker segments indicate many user defined compression parameters, such as for example progression order, main coding style, components coding style, and tile size.

• One or more Tile-part headers 320a, 320b, each comprising a Start of Tile-part marker (SOT = 0xFF90) 322, tile part information 324a, 324b, and a Start of Data marker (SOD = 0xFF93) 326. As will be appreciated, the SOT 322 and the SOD 326 have standard values, while the tile part information 324a, 324b comprises information about the tile; e.g. tile part information 324a indicates that it belongs to Tile 0, while tile part information 324b indicates that it belongs to Tile 1. At least one tile-part header 320a, 320b is required at the beginning of each tile-part, which comprises the tile-part header 320a, 320b and, usually, a following bit stream 330a, 330b, where the SOD marker indicates the start of the bit stream 330a, 330b that contains the compressed data.

• End of Code stream 340: this marker (EOC = 0xFFD9) indicates the end of the code stream.

It should be noted that for packet data, some code words - the ones in the range [0xFF90; 0xFFFF] -are reserved in JPEG2000. Such reserved code words are used as markers and marker segments that delimit the main building blocks of the stream. For example, the SOT (0xFF90), the SOD (0xFF93) and the EOC (0xFFD9) are such reserved code words. When encrypting the code stream, it is important to ensure that 'normal' (i.e. non-reserved) code words do not result in encrypted code words whose value are reserved.

As can be seen, the bit stream is mainly composed of packet headers and packet data that form packets. Figure 4 illustrates an exemplary JPEG2000 packet comprising a packet header 420 and packet data 440. Packet headers may be used in the bit stream or in the main header depending on the user defined options. Figure 4 shows the use of such headers: a Start of Packet header 410 (SOP = 0xFF91) and an End of Packet Header 430 (EPH = 0xFF92) respectively indicate the start and the end of the packet header 420.

The packet header 420 comprises information needed by the decoder to correctly parse and decode the packet data:

• Zero length packet: indicates whether or not the current packet is empty.
• Code-block inclusion: for each precinct, a tag tree is used to encode inclusion information for code blocks included.
• Zero-bitplane information: for each precinct, a tag tree encodes the first non zero bit-plane.
• Number of coding passes: Huffman-style code words are used to encode the number of coding passes included for each code block.
• Length of compressed data from each code block.

In "Techniques for a Selective Encryption of Uncompressed and Compressed Images", Proceedings of Advanced Concepts for Intelligent Vision Systems (ACIVS) 2002, Ghent, Belgium, September 9-11, 2002, M. Van Droogenbroeck and R. Benedett propose to have the JPEG Huffman coder terminate runs of zeros with code words/symbols in order to approach the entropy. Appended bits are added to these code words to fully specify the magnitudes and signs of non-zero coefficients, only these appended bits are encrypted using DES or IDEA. Using the criteria established hereinbefore, the solution performs as follows:

• **Tunability:** This method offers no tunability.
• **Visual degradation**: acceptable level of visual degradation is achieved.
• **Cryptographic security**: about 92% of the data is encrypted using secure symmetric ciphers and it is probably very difficult to break the encryption algorithm or try to predict the encrypted part.
• **Encryption reduction**: To achieve a sufficient level of visual degradation, it was found that at most 5 coefficients should be left unencrypted. This yields an encrypted part of 92%, which is relatively high.
• **Format compliance/transcodability:** JPEG compliant.
• **Compression friendliness**: The encryption is separated from the Huffman coder and has no impact on the compression efficiency.
• **Error resiliency**: the avalanche effect of DES algorithm propagates single bit errors to many bit errors, thus this encryption algorithm do not preserve error resiliency.

In "Selective Encryption of Wavelet-Packet Encoded Image Data", ACM Multimedia Systems Journal, Special Issue on Multimedia Security in 2003, A. Pommer and A. Uhl propose an algorithm based on AES encryption of the header information of wavelet packet encoding of an image, the header specifying the sub-band tree structure. Using the criteria established hereinbefore, the solution performs as follows:

- **Tunability:** the encryption parameters are static, no tunability is possible.
- **Visual degradation**: 100%; the encrypted content cannot be viewed without decryption.
- **Cryptographic security**: Not secure against chosen plaintext attack because statistical properties of wavelet coefficients are preserved by the encryption, so an approximation sub-band can be reconstructed. This will give the attacker the size of the approximation sub-band (lower resolution) and then neighbouring sub-bands can be reconstructed since close sub-bands contain highly correlated coefficients.
- **Encryption reduction**: high reduction in encryption; the sub-band tree structure represents a small fraction in wavelet encoding.
- **Format compliance/transcodability:** not compliant; indeed, it supposes that the encoder does not use standard wavelet packet decomposition.
- **Compression friendliness**: the sub-band tree is pseudo-randomly generated, which adversely impacts the compression efficiency.
- **Error resiliency**: the avalanche effect of AES algorithm propagates single bit errors to many bit errors.

In "Compliant Encryption of JPEG2000 Codestreams", IEEE International Conference on Image Processing (ICIP 2004), Singapore, October 2004, Y. Wu and R. H. Deng propose a JPEG2000 compliant encryption algorithm which iteratively encrypts Codeblock Contribution to Packets (CCPs). The encryption process acts on CCPs (in the packet data) using stream ciphers or block ciphers, preferably stream ciphers with arithmetic module addition. The key stream is generated using Rivest Cipher 4 (RC4). Each CCP is iteratively encrypted until it has no forbidden code words (i.e. any code word in the range [0xFF90, 0xFFFF]) Using the criteria established hereinbefore, the solution performs as follows:

- **Tunability:** not tunable
- **Visual degradation**: variable; depends on the number of CCPs encrypted.
- **Cryptographic security**: depends on the number of CCPs encrypted. However, the possible need for many iterations to obtain a compliant code stream could give information for side channel attacks.
- **Encryption reduction**: The encryption is iterative, thus many iterations may be needed to achieve compliance especially for large CCPs where almost half of the encrypted CCPs need to be encrypted more than once to achieve compliance.
- **Format compliance/transcodability:** Fully compliant with JPEG2000.
- **Compression friendliness**: No impact on compression.
- **Error resiliency**: The encryption algorithm is block based; any error at a given bit in the encrypted bit stream will propagate to many other bits, which introduces strong distortion on the decrypted image.

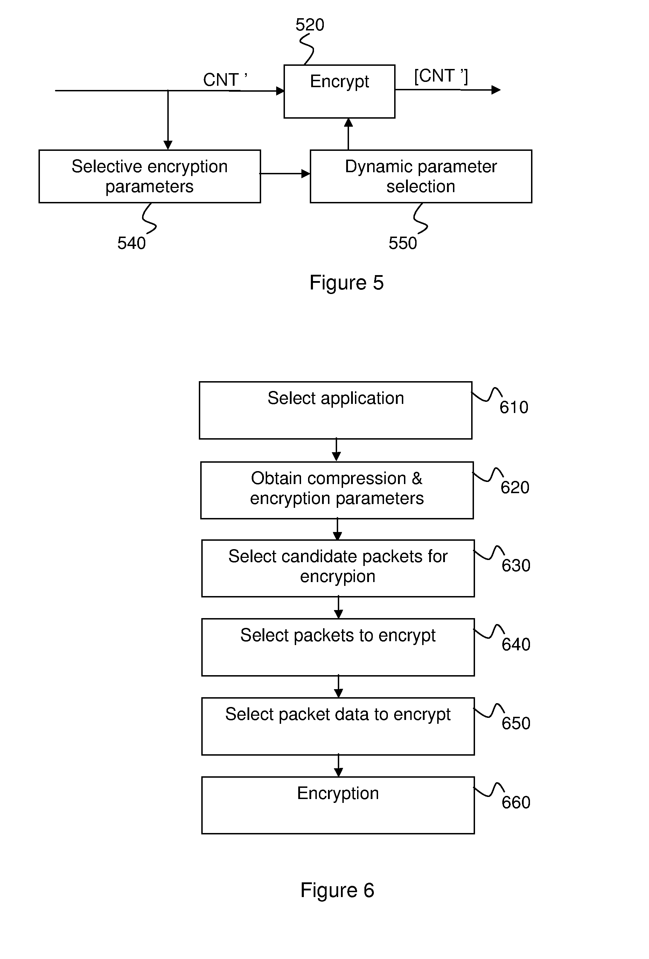

In "Selective Encryption of the JPEG2000 Bitstream", Journal of Electronic Imaging -- October - December 2006 -- Volume 15, Issue 4, 043013, R. Norcen and A. Uhl observe that JPEG2000 is an embedded bit stream and that the most important data is sent at the beginning of the bit stream. Based on this, the proposed scheme consists in AES encryption of selected packet data. The algorithm uses two optional markers SOP and EPH (as illustrated in Figure 5) to identify packet data. Then, this packet data is encrypted using AES in CFB mode, as the packet data has variable length. The experiments were conducted on two kinds of images (lossy and lossless compressed), with different progression orders (resolution and layer progression orders). The evaluation criterion was the visual degradation obtained for a given amount of encrypted data. It was found that for the lossy compressed images, layer progression gives better results. For lossless compressed images, resolution progression gives better results.

- **Tunability:** not tunable.
- **Visual degradation**: high visual degradation is achievable by encrypting 20% of the data.
- **Cryptographic security**: not addressed by the authors who base their security evaluation on visual degradation, which is not a reliable security criterion.
- **Encryption reduction**: 20% of the data is encrypted to achieve an acceptable level of visual degradation.
- **Format compliance/transcodability:** not JPEG-2000 compliant.
- **Compression friendliness**: no impact on compression.
- **Error resiliency**: the proposed scheme is based on AES in CFB mode. This chaining mode propagates errors in the ciphertext to many errors in the plaintext after decryption.

As will be seen, the prior art solutions have certain drawbacks:

- **Tunability:** The solutions propose static encryption algorithms. The main drawback of these approaches is that the encrypted part is not optimized to reduce the amount of data to be encrypted and maximize the content security.
- **Visual degradation**: It is desirable to have a tunable algorithm that allows multi-level visual degradation.
- **Cryptographic security**: In many solutions, this criterion is not considered at all and visual degradation is used as the only security criterion, which is not sufficient as many algorithms achieve important visual degradation but weak cryptographic security.

- **Encryption reduction**: while some solutions achieve significant encryption reduction, others do not.
- **Format compliance/transcodability:** Many proposals do not consider this problem when designing their selective encryption algorithm. Thus, the encrypted bit stream could not be decodable by a standard decoder.
- **Compression friendliness:** some selective encryption algorithms use very large encryption keys or introduce an important file size increase.
- **Error resiliency:** This property is rarely considered in the literature. In networks prone to error, it is very desirable that the encryption algorithm does not propagate errors or adversely impact the error resiliency techniques of the encoder.

It can therefore be appreciated that there is a need for a flexible solution that allows adaptation to different kinds of applications and minimizes the amount of data to encrypt while maximizing the security of the encrypted content. This invention provides such a solution.

## SUMMARY OF THE INVENTION

In a first aspect, the invention is directed to a method of encrypting audiovisual content organised in packets. The non-encrypted packet with the highest distortion-to-rate ratio is encrypted; and this encryption step is repeated until a predetermined distortion for the audiovisual content is obtained.

According to a first preferred embodiment, the method further comprises the preceding step of calculating the distortion-to-rate ratio of the packets. It is advantageous that the method comprises the preceding step of calculating the contribution of each packet to the reduction of image distortion.

According to a second preferred embodiment, the method further comprises the step of selecting at least one part of the packet to encrypt.

According to a third preferred embodiment, the method further comprises the step of outputting the encrypted audiovisual content and information about which packets are encrypted.

According to a fourth preferred embodiment, the method further comprises the step of sorting the packets according to their distortion-to-rate ratio.

In a second aspect, the invention is directed to an apparatus for encrypting audiovisual content organised in packets. The apparatus comprises an encryption device adapted to encrypt the non-encrypted packet with the highest distortion-to-rate ratio; and to repeat the encryption step until a predetermined distortion for the audiovisual content is obtained.

## BRIEF DESCRIPTION OF THE DRAWINGS

Preferred features of the present invention will now be described, by way of non-limiting example, with reference to the accompanying drawings, in which:

Figure 1 illustrates a traditional prior art approach for content access control;
Figure 2 illustrates selective encryption according to the prior art;
Figure 3 illustrates the prior art JPEG2000 main code stream structure;
Figure 4 illustrates an exemplary prior art JPEG2000 packet;
Figure 5 illustrates the main inventive idea of the invention;
Figure 6 illustrates a preferred embodiment of selective encryption according to the invention;
Figure 7 illustrates a method for optimal packet selection according to a preferred embodiment of the invention; and
Figure 8 illustrates apparatuses for encryption and decryption according to a preferred embodiment of the invention.

## PREFERRED EMBODIMENT OF THE INVENTION

Figure 5 illustrates the main inventive idea of the invention: the introduction of a new process called "dynamic data selection". For a given input compressed bit stream CNT', a set of encryption parameters is selected 540. With the selected set of encryption parameters and the compressed bit stream CNT', the packets to encrypt are dynamically selected 550 and encrypted 520 to produce an encrypted bit stream [CNT'].

In the preferred, non-limitative, embodiment, the invention is used in a JPEG2000 system. Figure 6 illustrates a preferred embodiment of selective encryption according to the invention. First, an application is chosen 610, as will be further described hereinafter, which determines the compression parameters, such as progression order and number of resolutions. The encryption is then controlled by a number of encryption parameters that depend on the chosen application:

- $R_e$: defines the resolutions to encrypt
- $L_{er}$: layers encryption ratio; defines the percentage of layers to encrypt
- $P_{er}$: packets encryption ratio; defines the percentage of bytes to encrypt within each packet
- $C_e$: defines the components to encrypt
- $P_e$: defines the precincts to encrypt

When the compression parameters and the encryption parameters have been obtained 620, a set of packets $S_1$ that are candidates for encryption is selected 630. This set of packets $S_1$ may for example be the packets of the resolutions to encrypt. Then, metadata generated by the JPEG2000 encoder is used to select 640 a subset of packets to encrypt (and at least some of the metadata is also sent, possibly together with further data that enables decryption, to the receiver for use in the decryption). For each selected packet, the packet data to encrypt is then selected 650, followed by encryption of the selected data of the selected packets. The person skilled in the art will appreciate that it is not always necessary to wait for all of the packets before the selection begins. The steps of the method may thus advantageously be performed in parallel, something that also applies to the encryption step 660. It can thus be seen that the encryption parameters determine the data to be encrypted.

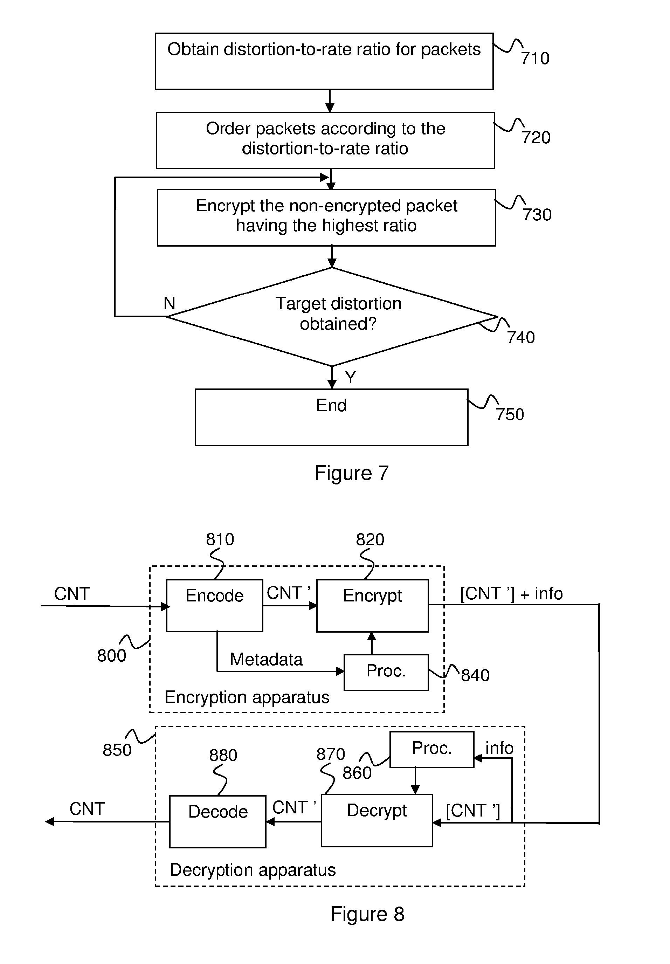

It should be noted that it is possible to optimize the packet encryption necessary to achieve a specified visual distortion (or degradation). Figure 7 illustrates a method for optimal packet selection. The JPEG2000 encoder generates a compressed image as well as related metadata comprising information about the contribution of each packet to the reduction of image distortion. This does not entail any additional computation, since these calculations are already performed by the encoder during the EBCOT rate control procedure. It is thus possible to calculate 710 the distortion-to-rate ratio for each packet as

$$\lambda = \frac{\partial D}{\partial r}$$

where D is the compressed image distortion and r is the size of the encoded bit stream corresponding to the packet. The packets may then be ordered 720 according to their distortion-to-rate ratio.

To reach a certain image distortion, it is then possible to start encryption with the packet with the highest distortion-to-rate ratio and continue with the next highest ration and so on, until the desired total image distortion is reached. Stated another way, the non-encrypted packet with the highest distortion-to-rate ratio is encrypted 730 and, if the target distortion is obtained (Y in step 740), then the method ends 750; otherwise (N in step 740) the method returns to step 730. The target distortion may be expressed as the sum of the contribution to distortion reduction of the encrypted packets.

Figure 8 illustrates apparatuses for encryption and decryption according to a preferred embodiment of the invention. The encryption apparatus 800 comprises an encoder 810 that provides an encoded data stream of packets CNT' to an encryption device 820 as well as metadata to at least one processor 840 (hereinafter "processor"). The processor is adapted to calculate the distortion-to-rate ratio and instruct the encryption device 820 (that may be embodied in the processor 840) to encrypt specific packets - i.e. the one(s) having the highest distortion-to-rate ratio - until a target distortion is obtained. The person skilled in the art will appreciate that there are many ways of doing this: the processor 840 may iteratively instruct the encryption device 820 to encrypt a packet at a time, but the processor 840 may also calculate which packets to encrypt so as to obtain the target distortion before providing instructions to encrypt all these packets. The encryption apparatus 800 is thus adapted to output a stream of encrypted and, usually also, unencrypted packets [CNT'] and information "info", such as an indication of which packets are encrypted, enabling correct decryption of the encrypted packets.

The decryption apparatus 850 comprises a processor 860 adapted to receive the information "info" enabling encryption and to instruct a decryption device 870 to decrypt specific packets. The decryption device 870 is adapted to receive the packet stream [CNT'] and to use the instructions from the processor 860 to decrypt the packets that are encrypted. Thus, a decrypted packet stream CNT' is obtained and sent to a decoding device 850 for decoding so as to obtain a reconstructed content CNT. The encryption device 850 is advantageously embodied in the processor 860. For the purposes of the description and the claims, "processor" is intended to refer to the entirety of the devices and so on with calculating abilities in an apparatus.

When it comes to the selection of packet data to encrypt, it will be appreciated that it is not always necessary to encrypt the entire packet data in order to obtain a sufficient level of security. In a preferred embodiment, the bytes of a packet are grouped into 16-byte blocks. If the last block is less than 16 bytes, it is left unencrypted. The preferred embodiment uses a modified CTR (counter) mode of the AES-128 algorithm that outputs a format compliant bit stream and preserves error resiliency. Packets are then encrypted depending on the packets encryption ratio; e.g. if this ratio is 50%, then only every other byte in the packet data is encrypted.

As the code words in the interval [FF90; FFFF] are forbidden, the modified CTR mode uses a modular addition instead of XOR. For decryption, all addition operations are replaced by subtraction. The encryption algorithm is as follows (where $B_k$ is the present byte to encrypt, $O_i[k]$ is the output of the AES algorithm, and $C_k$ is the encrypted byte):

- If $B_k$ = 0xFF, then do not encrypt $B_k$.
- Else:

  ○ If $B_{k-1}$ = 0xFF, then Ck = $(B_k + O_i[k])$modulo [0x90],
  ○ Else Ck = $(B_k + O_i[k])$modulo[0xFF]

It will be appreciated that the algorithm avoids reiterating the encryption algorithm in order to obtain compliant cipher bit stream.

As will be seen, the encryption parameters may be fine-tuned in order to obtain a target visual degradation or a target scalability:

- Visual degradation: increases with the number of encrypted resolutions ($R_e$) and the number of encrypted quality layers ($L_{er}$).
- Resolution scalability: for an image compressed with R resolution levels (R-1 decomposition levels), if a preview of size X'Y is desirable (with $X = M/2^n$, $Y = N/2^n$, $n \leq R-1$), the n highest resolution levels are encrypted.
- Spatial region scalability: particular regions of the image can be selectively encrypted by specifying which precincts to encrypt ($P_e$).
- Component scalability: particular components of the image can be selectively encrypted by specifying which components to encrypt ($C_e$).
- Quality scalability: quality layers can be selectively encrypted by specifying the layers encryption ratio ($L_{er}$).

The dynamic data selection can allow minimisation of the amount of data to encrypt for a given security level. The invention fulfils the criteria described hereinbefore:

- **Tunability:** it is tunable as it is possible to dynamically select the encryption parameters to obtain a certain goal.
- **Visual degradation**: multi-level visual degradation is achievable by tuning the encryption parameters as described hereinbefore.
- **Cryptographic security**: the encryption is based on a time-proven algorithm (AES) and performs on packet data which are encoded by an arithmetic coder. It is believed that algorithm cryptographically is quite secure, as it is computationally very difficult to decode an arithmetically encoded stream.
- **Encryption reduction**: the packet selection optimization allows achieving the target application visual degradation required with minimum number of bytes encrypted.
- **Format compliance/transcodability:** the modified CTR mode of AES-128 we propose outputs a format compliant cipher bit stream while avoiding reiterating the encryption. The metadata can be inserted at a specific marker segment (for example COM marker segment) and has no impact on format compliance.
- **Compression friendliness**: The proposed algorithm has no impact on the compressibility of the bit stream; a negligible overhead is introduced by the inclusion of the metadata into the bit stream.
- **Error resiliency**: the proposed algorithm encrypts each byte independently; any error in the cipher bit stream will only impact the same byte after decryption. Thus, the distortion will be confined to the code block to which that byte contributes.
  Finally, a number of application scenarios will be given for illustrative purposes.

**Resolution scalable scenario**: a reduced resolution preview is made available to all users (without the need to have the decryption key). The following parameters are set:

- For compression:

   ○ The progression order: PROG = RLCP or RPLC.
   ○ The number of resolutions (R): depends on the preview size.
   ○ The number of layers (L): it is recommended to set a sufficient number of quality layers L in order to be able to fine-tune the selective encryption to the right encryption reduction. To achieve high encryption reduction it is usually important to set $L \geq 10$.
   ○ Number of components (C): not important in this scenario.
   ○ Number of precincts (P): not important in this scenario. However, the choice of the number of precincts (or size) impacts compression efficiency.

- **For selective encryption:**

   ○ Layers encryption ratio ($L_{er}$): a high value is needed ($\geq 50\%$) if high visual degradation is required and vice versa.
   ○ Packets encryption ratio ($P_{er}$): a high value is needed ($\geq 50\%$) if high visual degradation is required with high cryptographic security. And vice versa.
   ○ Resolutions encrypted ($R_e$): Gives the list of resolutions to encrypt. In this scenario, only a number of high resolutions will be encrypted.
   ○ Encrypted precincts ($P_e$): all the precincts are candidates for encryption.
   ○ Encrypted components ($C_e$): all the components are candidates for encryption.

**Quality scalable scenario:** a reduced quality preview is made available to all users (without the need to have the decryption key). The following parameters are set:

- **For compression:**

   ○ The progression order: PROG = LRCP.
   ○ The number of resolutions (R): not important in this scenario. However it impacts compression efficiency.
   ○ The number of layers (L): it is recommended to set a sufficient number of quality layers L in order to be able to fine tune the selective encryption to the right encryption reduction. To achieve high encryption reduction it is usually important to set $L \geq 10$.
   ○ Number of components (C): not important in this scenario.

○ Number of precincts (P): not important in this scenario. However, the choice of the precincts number (or size) impacts compression efficiency.

• **For selective encryption:**

○ Layers encryption ratio ($L_{er}$): In this scenario, it is required to leave unencrypted a number of base quality layers and to encrypt enhancement quality layers. The lowest $L_{er}$% enhancement quality layers are encrypted.

○ Packets encryption ratio ($P_{er}$): a high value is needed (≥50%) if high visual degradation is required with high cryptographic security, and vice versa.

○ Number resolutions encrypted ($R_e$): $1 \le R_e \le R$, $R_e$ is required to be high if high visual degradation is needed.

○ Encrypted precincts ($P_e$): all the precincts are candidates for encryption.

○ Encrypted components ($C_e$): all the components are candidates for encryption.

**Selective spatial encryption scenario:** a particular region of the image needs to be encrypted. The following parameters are set:

• **For compression:**

○ The progression order: PROG = PCRL.

○ The number of resolutions (R): not important in this scenario. However, it impacts compression efficiency.

○ The number of layers (L): it is recommended to set a sufficient number of quality layers L in order to be able to fine tune the selective encryption to the right encryption reduction. To achieve high encryption reduction it is usually important to set.

○ Number of components (C): not important in this scenario.

○ Number of precincts (P): should be defined to achieve a target spatial granularity. The smaller the precincts are, the more accurate the spatial selection will be. On the other hand, small precincts adversely impact compression efficiency.

• **For selective encryption:**

○ Layers encryption ratio ($L_{er}$): a high value is needed if high visual degradation is required, and vice versa.

○ Packets encryption ratio ($P_{er}$): a high value is needed (≥50%) if high visual degradation is required with high cryptographic security, and vice versa.

versa.

○ Number of resolutions encrypted ($R_e$): $1 \le R_e \le R$, $R_e$ is required to be high if high visual degradation is needed.

○ Encrypted precincts ($P_e$): $P_e$ contains all the precincts that cover any part included in the region to encrypt.

○ Encrypted components ($C_e$): all the components are candidates for encryption.

**Selective component encryption scenario**: a subset of components of the image is to be encrypted. The following parameters are set:

• **For compression:**

○ The progression order: PROG = CPRL.

○ The number of resolutions (R): not important in this scenario. However, it impacts compression efficiency.

○ The number of layers (L): it is recommended to set a sufficient number of quality layers L in order to be able to fine tune the selective encryption to the right encryption reduction. To achieve high encryption reduction it is important to set L≥10.

○ Number of components (C): depends on the image class/nature. For example some medical images contain a large number of components.

○ Number of precincts (P): not important in this scenario. However, it impacts compression efficiency.

• **For selective encryption:**

○ Layers encryption ratio ($L_{er}$): a high value is needed (≥50%) if high visual degradation is required, and vice versa.

○ Packets encryption ratio ($P_{er}$): a high value is needed (≥50%) if high visual degradation is required with high cryptographic security, and vice versa.

○ Number of resolutions encrypted ($R_e$):$1 \le R_e \le R$, $R_e$ is required to be high if high visual degradation is needed.

○ Encrypted precincts ($P_e$): all the precincts are candidates for encryption.

○ Encrypted components ($C_e$): $C_e$ contains the indices of the components to be encrypted.

**Full encryption scenario:** full encryption of the image is required. The following parameters are set:

• **For compression:**

○ The progression order: PROG is not important in this scenario; it can be user defined.

○ The number of resolutions (R): not important in this scenario; it can be user defined.
○ The number of layers (L): not important in this scenario; it can be user defined.
○ Number of components (C): not important in this scenario; it can be user defined.
○ Number of precincts (P): not important in this scenario; it can be user defined.

• **For selective encryption:**

○ Layers encryption ratio ($L_{er}$): $L_{er}$ = 100%.
○ Packets encryption ratio ($P_{er}$): $P_{er}$ = 100%.
○ Number resolutions encrypted ($R_e$): $R_e$ = R.
○ Encrypted precincts ($P_e$): all the precincts are candidates for encryption.
○ Encrypted components ($C_e$): all the components are candidates for encryption.

Each feature disclosed in the description and (where appropriate) the claims and drawings may be provided independently or in any appropriate combination. Features described as being implemented in hardware may also be implemented in software, and vice versa. Connections may, where applicable, be implemented as wireless connections or wired, not necessarily direct or dedicated, connections.

It will be appreciated that the present invention is not limited to the preferred embodiment, JPEG2000, but may equally be used in other systems having a similar, layered architecture of the compressed pictures and in which the encoder provides information on the distortion reduction of each packet.

Reference numerals appearing in the claims are by way of illustration only and shall have no limiting effect on the scope of the claims.

**Claims**

1. A method of encrypting audiovisual content organised in packets, the method comprising the steps of:

   - encrypting (660) the non-encrypted packet with the highest distortion-to-rate ratio; and
   - repeating the encryption step until a predetermined distortion for the audiovisual content is obtained.

2. The method of claim 1, further comprising the preceding step of calculating (620) the distortion-to-rate ratio of the packets.

3. The method of claim 2, further comprising the preceding step of calculating (620) the contribution of each packet to the reduction of image distortion.

4. The method of claim 1, further comprising the step of selecting (650) at least one part of the packet to encrypt.

5. The method of claim 1, further comprising the step of outputting the encrypted audiovisual content and information about which packets are encrypted.

6. The method of claim 1, further comprising the step of sorting the packets according to their distortion-to-rate ratio.

7. An apparatus (800) for encrypting audiovisual content organised in packets (CNT'), the apparatus (800) comprising an encryption device (820) adapted to:

   - encrypt the non-encrypted packet with the highest distortion-to-rate ratio; and
   - repeat the encryption step until a predetermined distortion for the audiovisual content is obtained.

Figure 1 (prior art)

Figure 2 (prior art)

| SOP | Packet header | EPH | Packet data |
|-----|---------------|-----|-------------|
| 410 | 420 | 430 | 440 |

Figure 4 (prior art)

Figure 3 (prior art)

520

CNT ' → Encrypt → [CNT ']

Selective encryption parameters

Dynamic parameter selection

540

550

Figure 5

Select application    610

Obtain compression & encryption parameters    620

Select candidate packets for encrypion    630

Select packets to encrypt    640

Select packet data to encrypt    650

Encryption    660

Figure 6

Obtain distortion-to-rate ratio for packets   710

Order packets according to the
distortion-to-rate ratio   720

Encrypt the non-encrypted packet
having the highest ratio   730

N   Target distortion
obtained?   740

Y

End   750

Figure 7

810   820

CNT → Encode → CNT ' → Encrypt → [CNT '] + info

Metadata → Proc.   840

800

Encryption apparatus

850

Proc.   info

880   870   860

CNT ← Decode ← CNT ' ← Decrypt ← [CNT ']

Decryption apparatus

Figure 8

**EP 2 081 381 A1**

Europäisches Patentamt
European Patent Office
Office européen des brevets

## EUROPEAN SEARCH REPORT

Application Number

EP 08 30 0093

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DUFAUX F ET AL: "Smart Video Surveillance System Preserving Privacy" PROCEEDINGS OF THE SPIE, SPIE, BELLINGHAM, VA , US, vol. 5685, 1 March 2005 (2005-03-01), pages 54-63, XP002430633 ISSN: 0277-786X * abstract * Section 3.3, par. 4 Section 3.2 Section 3.3, par. 5 * figure 7 * Section 3, par. 2 ----- | 1-10 | INV. H04N7/16 |
| A | TAUBMAN D: "JPEG 2000 Verification Model VM3A, ISO/IEC JTC1/SC29/WG1 N1143" ISO/IEC JTC1/SC29/WG1 N1143, XX, XX, 1 February 1999 (1999-02-01), pages 1-90, XP002146099 * the whole document * ----- | 1-10 | |
| A | F. DUFAUX, S. WEE, J. APOSTOLOPOULOS, T. EBRAHIMI: "JPSEC for secure imaging in JPEG 2000" APPLICATIONS OF DIGITAL IMAGE PROCESSING XXVII, vol. 5558, November 2004 (2004-11), pages 319-330, XP002523784 * the whole document * ----- | 1-10 | TECHNICAL FIELDS SEARCHED (IPC) H04N |
| A | F. DUFAUX, T. EBRAHIMI: "Video surveillance using JPEG2000" APPLICATIONS OF DIGITAL IMAGE PROCESSING XXVII, vol. 5558, November 2004 (2004-11), pages 268-275, XP002523127 * the whole document * ----- | 1-10 | |

The present search report has been drawn up for all claims

| Place of search | Date of completion of the search | Examiner |
|---|---|---|
| The Hague | 16 April 2009 | Sery, Franck |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

14

**REFERENCES CITED IN THE DESCRIPTION**

**Non-patent literature cited in the description**

- **M. VAN DROOGENBROECK ; R. BENEDETT.** Techniques for a Selective Encryption of Uncompressed and Compressed Images. *Proceedings of Advanced Concepts for Intelligent Vision Systems (ACIVS) 2002,* 09 September 2002

- **Y. WU ; R. H. DENG.** Compliant Encryption of JPEG2000 Codestreams. *IEEE International Conference on Image Processing (ICIP 2004),* October 2004
- **R. NORCEN ; A. UHL.** Selective Encryption of the JPEG2000 Bitstream. *Journal of Electronic Imaging,* October 2006, vol. 15 (4), 043013